# EUROPÄISCHE PATENTANMELDUNG

(11) **EP 0 532 946 A1**
(43) Veröffentlichungstag der Anmeldung: **24.03.1993**
(21) Anmeldenummer: 92114557.9
(22) Anmeldetag: 26.08.1992
(51) Int. Cl.: B65G 1/137

(54) **Vorrichtung zum Lagern und automatischen Kommissionieren von Stückgütern**

(30) Priorität: 17.09.1991 DE 9111566 U
(71) Anmelder: KNAPP LOGISTIK AUTOMATION, Ges. m.b.H., A-8042 Graz (AT)
(72) Erfinder: Freudelsperger, Karl, Dipl.-Ing., A-8071 Hausmannstätten (AT)
(74) Vertreter: Kinzebach, Werner, Dr.

(57) **Zusammenfassung**

Die Erfindung betrifft eine Vorrichtung (1) zum Lagern und automatischen Kommissionieren von Stückgütern. Zu dieser Vorrichtung (1) gehören Fachböden (16), die in mindestens einer Reihe geneigt angeordnet und ausziehbar an einem Rahmen befestigt sind, Sortenmagazine auf den Fachböden (16) mit jeweils einem Ausgeber (35) am unteren Ende, und mindestens einen Horizontalförderer (9), der unterhalb der Fachböden (16) und quer zu deren unteren Stirnseiten (17) verläuft. Sie ist dadurch gekennzeichnet, daß sich der Horizontalförderer (9) in der Breite nur über einen mittigen Teil der Vorrichtung (1) erstreckt und in dem nicht vom Horizontalförderer (9) überdeckten Teil zu ihm abfallende Leitbleche (10) vorgesehen sind, der Rahmen einen auf einer Reihe von Pfosten (12) aufgesetzten oberen Träger (14) umfaßt, wobei die Pfosten (12) über dem Horizontalförderer (9) angeordnet und zu dessen beiden Seiten auf Zweibeinstützen (13) abgestützt sind und zu beiden Seiten der Reihe von Pfosten (12) je eine Reihe von Fachböden (16) vorgesehen ist.

## Beschreibung

Die Neuerung betrifft eine Vorrichtung zum Lagern und automatischen Kommissionieren von Stückgütern, umfassend Fachböden, die in mindestens einer Reihe geneigt angeordnet und ausziehbar an einem Rahmen befestigt sind, Sortenmagazine auf den Fachböden mit jeweils einem Ausgeber am unteren Ende, und mindestens einen Horizontalförderer, der unterhalb der Fachböden und quer zu deren unteren Stirnseiten verläuft. Bei den Stückgütern kann es sich z.B. um in Schachteln verpackte Medikamente, Kosmetika oder Chemikalien handeln.

Ein derartiges Kommissionierregal ist aus der DE-OS 32 13 119 A1 bekannt. Diese Vorrichtung weist eine Reihe von Fachböden mit Sortenmagazinen auf. Die Fachböden sind geneigt angeordnet und an Teleskopführungen ausziehbar an einem Brückenrahmen befestigt. Unterhalb der Fachböden befinden sich Förderbänder, deren Breite der Breite der Fachböden entspricht. Aus den Sortenmagazinen ausgegebene Stückgüter fallen also direkt auf eines der Förderbänder. Der Brückenrahmen verläuft parallel zur Förderrichtung mittig über den Förderbändern. Er ist auf zwei Pfeilern abgestützt, die sich an den Stirnseiten der Fachbodenreihe, jenseits des von den Förderbändern überstrichenen Bodenbereichs der Vorrichtung befinden.

Die im Stand der Technik beschriebene Vorrichtung hat den Nachteil, daß sie nicht auf einfache Weise beliebig lang ausgeführt werden kann; die Längenausdehnung ist nämlich durch die größte freie Spannweite des Brückenrahmenträgers beschränkt. Die Vorrichtung läßt sich auch nicht einfach baukastenartig verschiedenen Längenanforderungen anpassen. Da sich die Förderbänder in der Breite über die ganze Vorrichtung erstrecken, sind auch der möglichen Breitenausdehnung der Fachböden enge Grenzen gesetzt. Insgesamt ist die bekannte Vorrichtung für den Einsatz in Großkommissionieranlagen, wo auf kleinster Stellfläche mit geringstem apparativen Aufwand tausende von verschiedenen Sorten bereitgehalten werden müssen, nicht optimal.

Es ist daher Aufgabe der Neuerung, die im Stand der Technik gegebene Vorrichtung so weiterzubilden, daß sie wesentlich länger und auch breiter gebaut werden kann, und dabei baukastenartig an verschiedene Längen anpaßbar ist. Die Vorrichtung soll dabei möglichst platzsparend und einfach ausgeführt sein.

Diese Aufgabe wird gelöst durch eine Vorrichtung der eingangs erwähnten Art, die dadurch gekennzeichnet ist, daß sich der Horizontalförderer in der Breite nur über einen mittigen Teil der Vorrichtung erstreckt und in dem nicht vom Horizontalförderer überdeckten Teil zum Förderer hin abfallende Leitbleche vorgesehen sind, der Rahmen einen auf einer Reihe von Pfosten aufgesetzten oberen Träger umfaßt, wobei die Pfosten über dem Horizontalförderer angeordnet und zu dessen beiden Seiten auf Zweibeinstützen abgestützt sind, und zu beiden Seiten der Reihe von Pfosten je eine Reihe von Fachböden vorgesehen ist.

Vorzugsweise weisen die Fachböden horizontale Tragschienen auf, die an den oberen Träger ausziehbar befestigt sind. Die Tragschienen sind vorzugsweise durch am oberen Träger angeordnete Rollen geführt. Bei einer bevorzugten Ausführungsform ragt der obere Träger seitlich nach außen über die Reihe von Fachböden. Bei einer anderen bevorzugten Ausführungsform ragen die Tragschienen seitlich über die Fachböden hinaus in das Innere der Vorrichtung. Vorteilhaft sind dabei gegenüberliegende Fachböden höhenversetzt angeordnet. Vorzugsweise sind die Tragschienen auf Tragschienenstützen angeordnet, die sich vom Fachboden nach oben erstrecken. Vorteilhaft weisen die Fachböden jeweils wenigstens ein Stückgut-Vorratsfach auf, das an den Tragschienenstützen angeordnet ist. Bei dem Horizontalförderer handelt es sich vorzugsweise um einen Rollenförderer. Vorteilhaft sind die Zweibeinstützen "A"-förmig ausgebildet. Vorzugsweise ist die untere Stirnseite jedes Sortenmagazins als Ausgebeöffnung ausgebildet; dabei umfaßt der Ausgeber einen versenkbaren, die Ausgeberöffnung wenigstens teilweise versperrenden Anschlag. Der Horizontalförderer kann angetriebene oder nicht-angetriebene Rollen aufweisen. Im Fall nichtangetriebener Rollen ist er leicht geneigt angeordnet.

Wie die obigen Ausführungen zeigen, hat die neuerungsgemäße Vorrichtung den Vorteil, baukastenartig aufgebaut zu sein. Durch eine Wahl der Anzahl der Pfosten kann, in kleinen Schritten, jede gewünschte Länge verwirklicht werden, wobei auch sehr große Längen möglich sind. Durch die Verwendung von Leitblechen können die Fachböden breiter ausgeführt werden. Die neuerungsgemäße Vorrichtung nützt daher bei guter Zugänglichkeit der Sortenmagazine den Stellplatz nahezu optimal aus, und ist dabei einfachst aufgebaut.

Im folgenden wird die Neuerung anhand der angefügten Figuren näher beschrieben. Es zeigen:
- Fig. 1: einen Querschnitt einer beispielhaften Ausführungsform der neuerungsgemäßen Vorrichtung mit seitlich nach außen ragendem oberen Träger, senkrecht zur Längsrichtung, d.h. zur Förderrichtung des Horizontalförderers;
- Fig. 2: eine Seitenansicht der in Fig. 1 gezeigten Vorrichtung, wobei nur zwei Fachböden gezeigt sind;
- Fig. 3: einen Querschnitt einer Vorrichtung entsprechend Fig. 1, jedoch einer anderen beispielhaften Ausführungsform mit seitlich über die Fachböden hinaus in das Innere der Vorrichtung ragenden Tragschienen.

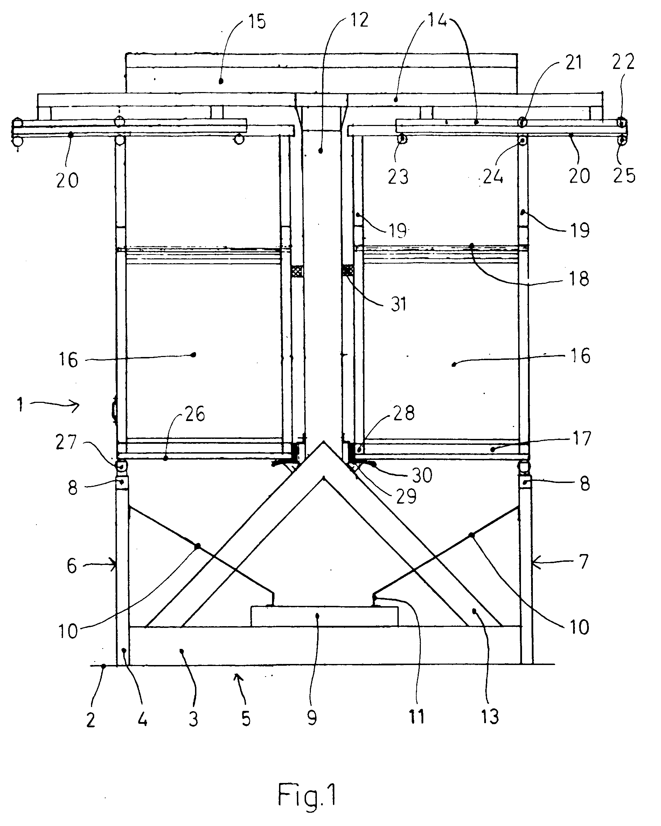

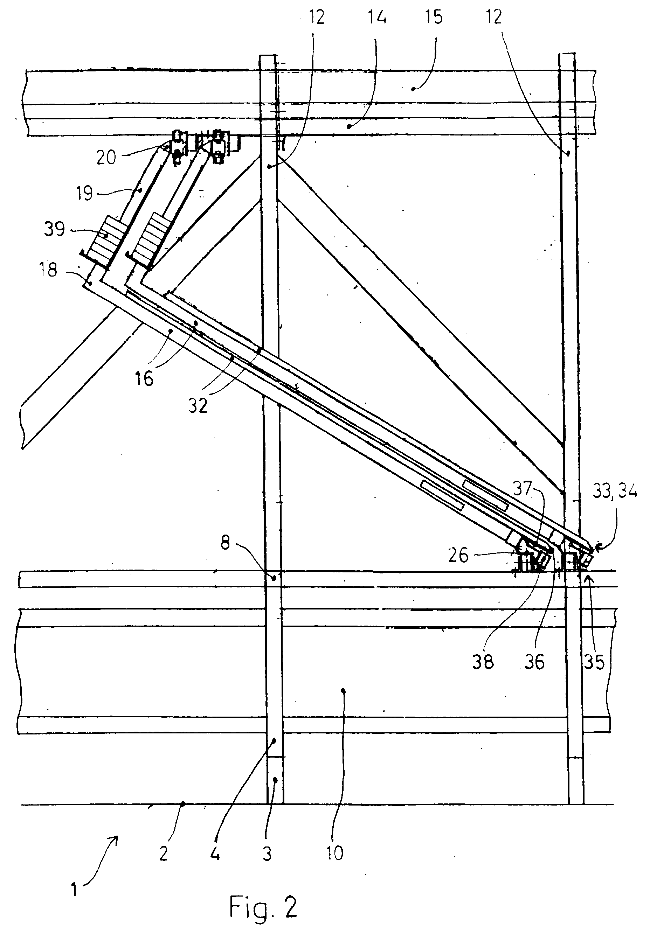

In den Fig. 1 und 2 ist die Vorrichtung zum Lagern und automatischen Kommissionieren von Stückgütern allgemein mit 1 bezeichnet. Sie ruht auf dem Boden 2 mit einem Gerüst von horizontalen 3 und vertikalen Grundrahmenstreben 4. Dieses Gerüst wird als Grundverstärkungsrahmen 5 bezeichnet. Die vertikalen Grundrahmenstreben 4 sind in jeweils einer Reihe an den beiden Außenseiten 6, 7 der Vorrichtung 1 angeordnet. Sie erstrecken sich vom Boden 2 bis zu einer Höhe, die ungefähr einem Drittel der Gesamthöhe der Vorrichtung 1 entspricht. Die vertikalen Grundrahmenstreben 4 einer Reihe sind jeweils durch ein Längsprofil 8 miteinander verbunden.

Mittig im Grundverstärkungsrahmen 5 verläuft in Längsrichtung ein Rollenförderer 9 mit angetriebenen Rollen. Die Breite des Rollenförderers 9 ist etwas kleiner als ein Viertel der Gesamtbreite der Vorrichtung 1. Die nicht vom Rollenförderer 9 überdeckten Teile des Bodens zu beiden Seiten des Förderers 9 werden durch jeweils ein Leitblech 10 überdeckt. Die Leitbleche 10 sind zum Förderer 9 hin abfallend angeordnet; ihre äußeren oberen Längsseiten sind an den vertikalen Grundrahmenstreben 4 nahe deren oberen Enden befestigt, ihre unteren inneren Längsseiten an seitlichen Führungsblechen 11 des Rollenförderers 9. Die Neigung der Leitbleche 10 gegenüber der Horizontalen ist so groß gewählt, daß auf die Leitbleche 10 fallende Stückgüter mit Sicherheit unter der gemeinsamen Wirkung der Schwerkraft und der Reibungskräfte auf den Rollenförderer 9 gleiten.

In festen Abständen in Längsrichtung sind mittig über dem Rollenförderer 9 vertikale Pfosten 12 auf Zweibeinstützen 13 angeordnet. Die zweibeinstützen 13 haben die Form eines "A", wobei der Steg des "A" nicht vorhanden ist. Die Verbindung zwischen den Pfosten 12 und den Zweibeinstützen 13 befindet sich an der Spitze des "A", ungefähr auf der Höhe der Längsprofile 8. Die Zweibeinstützen 13 überspannen den Rollenförderer 9 in Querrichtung; die Schenkel des "A" stützen sich zu beiden Seiten des Förderers 9 an den horizontalen Grundrahmenstreben 3 ab. An den Durchtrittsorten der Zweibeinstützen 13 durch die Leitbleche 10 sind in den Leitblechen 10 Aussparungen vorgesehen, die den Durchtritt der Zweibeinstützen 13 erlauben.

Die Pfosten 12 sind an ihren oberen Enden durch einen horizontalen oberen Träger 14 verbunden. Der obere Träger 14 überdeckt in Längs- und in Querrichtung die ganze Vorrichtung 1. In Querrichtung ragt er an beiden Seiten über die Außenseiten 6, 7 der Vorrichtung 1 hinaus. Pfosten 12 und obere Träger 14 haben zusammen in einem Querschnitt senkrecht zur Längsrichtung die Form eines "T". Auf dem oberen Träger 14 ist eine obere Trägerverstärkung 15 angeordnet, die nicht über die Außenseiten 6, 7 ragt.

Zu beiden Seiten der Reihe, die durch die Pfosten 12 gebildet wird, ist jeweils eine Reihe von Fachböden 16 in der Anordnung eines geneigten Stapels vorgesehen. Eine untere 17 und obere Stirnseite 18 der Fachböden 16 verlaufen horizontal und quer zum Rollenförderer 9. Der Neigungwinkel der Fachböden 16 zur Horizontalen beträgt 30°. Aus der von dem Fachboden 16 aufgespannten Ebene erstrecken sich an der oberen Stirnseite 18 rechtwinklig nach oben zwei Tragschienenstützen 19. Sie dienen dazu, eine Tragschiene 20, die parallel zur oberen Stirnseite 18 gerichtet ist, im Abstand über dem Fachboden 16 zu halten.

An den Tragschienenstützen 19 ist ein Vorratsfach 39 für Stückgüter mit Stapelrichtung quer zum Fachboden 16 angeordnet. Es dient dazu, einen Übervorrat von Stückgütern aufzunehmen, zusätzlich zu dem auf dem Fachboden 16 liegenden Vorrat von Stückgütern.

Die Fachböden 16 sind seitlich, d.h. quer zur Längsrichtung, vollständig ausziehbar ausgebildet. Dazu ist die Tragschiene 20 im Querschnitt doppel-T-förmig ausgebildet. In jede Tragschiene 20 greifen zwei obere 21, 22 und drei untere Tragrollen 23, 24, 25 ein. Die Rollen 21 - 25 sind am oberen Träger 14 befestigt, ihre Achsen verlaufen horizontal in Längsrichtung. Die mit 23 bezeichnete untere Tragrolle befindet sich im Inneren der Vorrichtung 1 in der Nähe der Reihe der Pfosten 12, die mit 24 bezeichnete an der Außenseite 6, 7 und die mit 25 bezeichnete ganz außen an dem oberen Träger 14. Die obere Tragrolle 21 befindet sich senkrecht über der unteren Rolle 24, die obere Rolle 22 senkrecht über der unteren Rolle 25. Der Überstand des oberen Längsträgers 14 ist etwas größer als die halbe Breite eines Fachbodens 16. Dies erlaubt ein völliges Ausziehen eines Fachbodens 16 bei noch kippsicherer Aufhängung. Die obere Nut der Tragschiene 20 ist am inneren Ende der Tragschiene 20 mit einem Anschlag versehen, der beim Ausziehen an die innere Rolle 21 anschlägt und so die Ausziehweite begrenzt. Die Tragschiene 20 ragt nach außen über den Fachboden 16 hinaus, und zwar mit einer Weite, die den Überstand des oberen Trägers 14 über die Außenseite 6, 7 entspricht. An der unteren Stirnseite 17 eines Fachbodens 16 ist eine horizontale Auflageschiene 26 vorgesehen, die auf einer oben auf dem Längsprofil 8 angeordneten Stützrolle 27 aufliegt. Durch die Anordnung der Rollen 21 - 25, 27 und den Überstand der Tragschiene 20 nach außen ist in jeder Auszieh-Position eines Fachbodens 16 wenigstens eine Dreipunkt-Lagerung sichergestellt.

Im eingeschobenen Zustand kommt ein Fachboden 16 darüber hinaus mit seiner inneren unteren Ecke 28 in Anlage an einen Anschlagwinkel 29. Der Anschlagwinkel 29 ist mit einer elastischen Auflage versehen und kann Druckkräfte in vertikaler und in seitlicher Richtung aufnehmen. Der horizontale Schenkel 30 des Anschlagwinkels 29 ist außen nach unten abgeschrägt, um ein ordnungsgemäßes Auflaufen der Ecke 28 beim Einschieben des Fachbodens 16 sicherzustellen. Außerdem ist über dem Anschlagwinkel 29 ein elastischer Anschlagblock 31 vorgesehen.

Auf der Oberseite eines Fachbodens 16 sind mehrere von oben nach unten parallel verlaufende Trennstege 32 vorgesehen (die Trennstege 32 sind nur in Fig. 2 gezeigt). Jeweils zwei benachbarte Trennstege 32 bilden zusammen mit dem von ihnen eingeschlossenen Streifen des Fachbodens 16 ein oben offenes Sortenmagazin, wobei ein Trennsteg 32 im allgemeinen eine gemeinsame Seitenwand zweier benachbarter Sortenmagazine bildet. Die Trennstege 32 sind seitlich auf dem Fachboden verschiebbar befestigt; die Sortenmagazine können so verschiedenen Stückgut-Packungsgrößen angepaßt werden.

Die untere Stirnseite 33 eines Sortenmagazins dient als Ausgebeöffnung 34. An der Ausgebeöffnung 34 ist ein automatisch betätigbarer Ausgeber 35 angeordnet. Der Ausgeber 35 wird gebildet durch eine Anschlagleiste 36, die rechtwinklig am freien Ende einer einseitig eingespannten Federzunge 37 befestigt ist. Das freie Ende der Federzunge 37 ist mit dem Anker eine Elektromagneten 38 verbunden. Die Anschlagleiste 36 ragt im Ruhezustand in das Sortenmagazin hinein und versperrt dadurch teilweise die Ausgebeöffnung 34. Bei Erregung des Elektromagneten 38 wird die Federzunge 37 so weit nach unten gezogen, daß die Anschlagleiste 36 die Ausgebeöffnung 34 freigibt. Der Elektromagnet 38 ist so flach ausgeführt, daß er nur wenig nach unten aus dem Fachboden herausragt. Der Elektromagnet 38 ist unmittelbar unter der Ausgebeöffnung 34 angeordnet, dort wo sich unter ihm kein weiterer Fachboden 16 befindet. Die flache Bauweise der Elektromagneten 38 ermöglicht zusammen mit den erwähnten Anordnung eine extrem dichte Packung der Fachböden und damit eine optimale Platzausnutzung.

Nicht gezeigt in den Figuren ist eine Auswurfüberwachung mit Hilfe einer Lichtschranke für jeweils einen Fachboden 16, bei der der Lichtstrahl quer über alle Ausgebeöffnungen 34 der Sortenmagazine des Fachbodens 16 verläuft. Nicht gezeigt ist ferner ein Rechner, der mit den Elektromagneten 38 der Ausgeber 35, dem Antrieb des Rollenförderers 9 und den Signalausgängen der Lichtschranken verbunden ist. Er dient zur Steuerung und Überwachung des Kommissionierens.

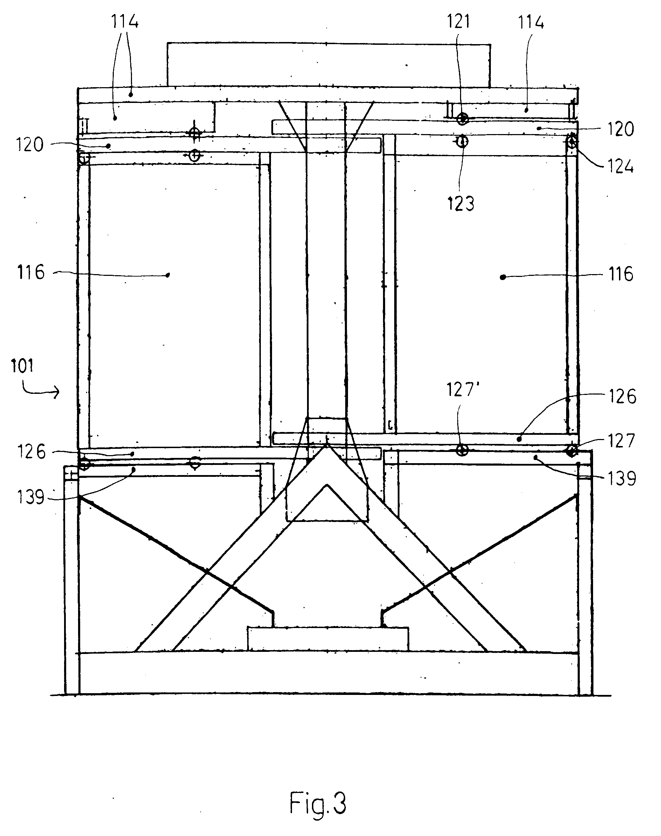

Im folgenden ist eine andere beispielhafte Ausführungsform der neuerungsgemäßen Vorrichtung mit von den Fachböden nach innen ragenden Tragarmen anhand der Fig. 3 beschrieben. Diese Ausführungsform ist in den meisten Merkmalen mit der bereits anhand der Fig. 1 und 2 beschriebenen identisch. Deshalb sind im folgenden nur die unterschiedlichen Merkmale erwähnt; für alle nicht erwähnten Merkmale trifft das bereits Beschriebene zu.

Der obere Längsträger 114 ragt nicht seitlich über die Außenseiten 6, 7 hinaus. Die Tragschiene 120 steht nicht nach außen, sondern nach innen über den Fachboden 116 über. Der Überstand ist etwas größer als die halbe Breite des Fachbodens 116. Die Tragschiene 120 ist in zwei unteren Tragrollen 123, 124 und in einer oberen Tragrolle 121 geführt. Die mit 124 bezeichnete Tragrolle befindet sich an der Außenseite 6,7, die mit 123 bezeichnete davon nach innen versetzt, um eine Strecke, die ungefähr dem Überstand der Tragschiene 120 entspricht. Die oberen Tragrolle 121 ist senkrecht über der unteren Tragrolle 123 angeordnet.

Die Auflageschiene 126 an der unteren Stirnseite 17 des Fachbodens 116 steht ebenfalls nach innen über den Fachboden 116 über, und zwar mit einem Überstand, der dem Überstand der Tragschiene 120 entspricht. Die Auflageschiene 126 liegt auf zwei Stützrollen 127, 127' auf, die an einem Querprofil 139 gelagert sind. Das Querprofil 139 verläuft horizontal auf der Höhe des Längsprofils 8. Die Stützrolle 127 befindet sich senkrecht unter der unteren Tragrolle 124, die Stützrolle 127' unter den Tragrollen 121, 123. Die Ausziehweite des Fachbodens 116 ist begrenzt durch ein Anlaufen eines Anschlags am inneren Ende der Tragschiene 120 an die Rollen 121, 123. Die Rollen 121, 123, 124, 127, 127' liegen auf einer Seite der Vorrichtung höher als auf der anderen Seite; der Höhenunterschied ist etwas größer als die Höhe des oberen Trägers 114 oder der Auflageschiene 126. Dadurch sind gegenüberliegende Fachböden 116 höhenversetzt angeordnet. Diese höhenversetzte Anordnung erlaubt ein Übereinanderschieben der Überstände der oberen Träger 114 und der Auflageschienen 126 in eingeschobenem Zustand der Fachböden 116. Anschlagwinkel 29 und Anschlagblöcke 31 entfallen bei dieser Ausführungsform.

Zum automatischen Kommissionieren wird bei beiden beispielhaften Ausführungsformen der Elektromagnet 38 des Sortenmagazins, das die gewünschte Stückgutsorte enthält, rechnergesteuert erregt. Dadurch wird die Federzunge 37 so weit nach unten gezogen, daß die Anschlagleiste 36 in das Niveau des Fachbodens 16, 116 versenkt wird. Das zu unterst liegende Stückgut rutscht dann unter der Wirkung der Schwerkraft aus dem Magazin, unterbricht den Lichtstrahl der Lichtschranke und fällt auf eines der Leitbleche 10. Die Erregung des Elektromagneten 38 ist so kurz, daß immer nur ein Stückgut aus dem Magazin ausgegeben wird. Die im Magazin nachrutschenden Stückgüter werden durch die bereits wieder in Ruhestellung befindliche Anschlagleiste 36 im Magazin gehalten. Das Ausgeben mehrerer Stückgüter kann in verschiedenen Fachböden 16, 116 zeitlich parallel erfolgen, innerhalb eines Fachbodens 16, 116 jedoch nur nacheinander, mit einem derartigen zeitlichen Mindestabstand, daß zwischen zwei ausgegebenen Stückgütern die Unterbrechung des Lichtstrahls aufgehoben ist. Dies ermöglicht eine Auswurfüberwachung mit nur einer Lichtschranke pro Fachboden 16, 116. Die ausgegebenen Stückgüter gleiten auf den Leitblechen 10 abwärts, fallen auf den Rollenförderer 9 und werden weiter zu einer nicht gezeigten Sammel- oder Ausgabestation transportiert. Nachdem alle zu einem Kommissionierauftrag gehörenden Stückgüter ausgegeben wurden, wird der Kommissioniervorgang für eine kurze Zeit unterbrochen, um eine räumliche Separation von zu verschiedenen Aufträgen gehörenden Stückgütern sicherzustellen.

Zum Nachfüllen werden die Fachböden 16, 116 seitlich bis zum Anschlag herausgezogen, und ein Stückgutstapel wird von schräg oben in das oben offene Sortenmagazin eingelegt. Das Nachfüllen ist ohne Betriebsunterbrechung möglich. Dazu wird vorübergehend unter dem herausgezogenen Fachboden 16, 116 eine mobile Leitblech-Verlängerung angeordnet. Bei einer Ausgabe in herausgezogenem Zustand fällt das ausgegebene Stückgut zunächst auf die Leitblech-Verlängerung und gleitet darauf auf das Leitblech 10.

Der Rahmen der Vorrichtung ist aus Aluminiumprofilen gefertigt und wird in Einzelteilen geliefert. Zum Aufstellen werden die Profile an Ort und Stelle miteinander verschraubt.

## Patentansprüche

1. Vorrichtung zum Lagern und automatischen Kommissionieren von Stückgütern, umfassend
Fachböden, die in mindestens einer Reihe geneigt angeordnet und ausziehbar an einem Rahmen befestigt sind, Sortenmagazine auf den Fachböden mit jeweils einem Ausgeber am unteren Ende, und
mindestens einen Horizontalförderer, der unterhalb der Fachböden und quer zu deren unteren Stirnseiten verläuft,
**dadurch gekennzeichnet,** daß
sich der Horizontalförderer (9) in der Breite nur über einen mittigen Teil der Vorrichtung (1, 101) erstreckt und in dem nicht vom Horizontalförderer (9) überdeckten Teil zu ihm abfallende Leitbleche (10) vorgesehen sind,
der Rahmen einen auf einer Reihe von Pfosten (12) aufgesetzten oberen Träger (14, 114) umfaßt, wobei die Pfosten (12) über dem Horizontalförderer (9) angeordnet und zu dessen beiden Seiten auf Zweibeinstützen (13) abgestützt sind und
zu beiden Seiten der Reihe von Pfosten (12) je eine Reihe von Fachböden (16, 116) vorgesehen ist.

2. Vorrichtung nach Anspruch 1, dadurch gekennzeichnet, daß die Fachböden (16, 116) horizontale Tragschienen (20, 120) aufweisen, die an dem oberen Träger (14, 114) ausziehbar befestigt sind.

3. Vorrichtung nach Anspruch 2, dadurch gekennzeichnet, daß die Tragschienen (20, 120) durch am oberen Träger (14, 114) angeordnete Rollen (21 - 25, 121, 123, 124) geführt sind.

4. Vorrichtung nach Anspruch 2 oder 3, dadurch gekennzeichnet, daß der obere Träger (14) seitlich nach außen über die Reihen von Fachböden (16) ragt.

5. Vorrichtung nach Anspruch 2 oder 3, dadurch gekennzeichnet, daß die Tragschiene (120) seitlich über den Fachboden (116) hinaus in das Innere der Vorrichtung (101) ragt.

6. Vorrichtung nach Anspruch 5, dadurch gekennzeichnet, daß gegenüberliegende Fachböden (116) höhenversetzt angeordnet sind.

7. Vorrichtung nach einem der Ansprüche 2 bis 6, dadurch gekennzeichnet, daß die Tragschiene (20, 120) auf Tragschienenstützen (19) angeordnet ist, die sich vom Fachboden (16, 116) nach oben erstrecken.

8. Vorrichtung nach Anspruch 7, dadurch gekennzeichnet, daß die Fachböden (16, 116) jeweils wenigstens ein Stückgut-Vorratsfach (39) aufweisen, das an den Tragschienenstützen (19) angeordnet ist.

9. Vorrichtung nach einem der Ansprüche 1 bis 8, dadurch gekennzeichnet, daß der Horizontalförderer ein Rollenförderer (9) ist.

10. Vorrichtung nach einem der Ansprüche 1 bis 9, dadurch gekennzeichnet, daß die Zweibeinstützen (13) "A"-förmig sind.

11. Vorrichtung nach einem der Ansprüche 1 bis 10, dadurch gekennzeichnet, daß die untere Stirnseite (33) jedes Sortenmagazins als Ausgebeöffnung (34) ausgebildet ist, und der Ausgeber (35) einen versenkbaren, die Ausgebeöffnung (34) wenigstens teilweise versperrenden Anschlag (36) umfaßt.
